# FASCICULE DE BREVET EUROPEEN

(11) **EP 0 683 486 B1**
(45) Date de publication et mention de la délivrance du brevet: **16.04.1997**
(21) Numéro de dépôt: 95401104.5
(22) Date de dépôt: 12.05.1995
(51) Int. Cl.: G11B 7/26, G11B 23/40

(54) **Procédé d'impression de disques compact et dispositif pour sa mise en oeuvre**
Verfahren und Vorrichtung zum Bedrucken von Compactdiscs
Method and device for printing compact discs

(30) Priorité: 17.05.1994 FR 9405980
(43) Date de publication de la demande: 22.11.1995
(73) Titulaire: Charle, Hervé, 91120 Palaiseau (FR); Charle, Christophe, 91120 Palaiseau (FR); Charle, Nicolas, 91120 Palaiseau (FR)
(72) Inventeur: Charle, Hervé, 91120 Palaiseau (FR); Charle, Christophe, 91120 Palaiseau (FR); Charle, Nicolas, 91120 Palaiseau (FR)
(74) Mandataire: Hirsch, Marc-Roger

(56) Documents cités:
- DE-A- 4 302 384
- FR-A- 2 613 523
- DATABASE WPI Section Ch, Week 9403 Derwent Publications Ltd., London, GB; Class A89, AN 94-018809 & JP-A-05 325 259 (TDK CORP.) , 10 Décembre 1993
- DATABASE WPI Section Ch, Week 9336 Derwent Publications Ltd., London, GB; Class A89, AN 93-283303 & JP-A-05 198 015 (RICOH KK)
- PATENT ABSTRACTS OF JAPAN vol. 15 no. 347 (P-1246) ,3 Septembre 1991 & JP-A-03 130981 (PIONEER ELECTRON CORP.) 4 Juin 1991,
- PATENT ABSTRACTS OF JAPAN vol. 14 no. 258 (P-1055) ,4 Juin 1990 & JP-A-02 068788 (SANYO ELECTRIC CO LTD) 8 Mars 1990,
- PATENT ABSTRACTS OF JAPAN vol. 9 no. 257 (P-396) ,15 Octobre 1985 & JP-A-60 106040 (MATSUSHITA DENKI SANGYO KK) 11 Juin 1985,
- PATENT ABSTRACTS OF JAPAN vol. 10 no. 210 (P-479) [2266] ,23 Juillet 1986 & JP-A-61 048144 (MATSUSHITA ELECTRIC IND CO LTD) 8 Mars 1986,
- PATENT ABSTRACTS OF JAPAN vol. 15 no. 471 (P-1282) ,28 Novembre 1991 & JP-A-03 203048 (MATSUSHITA ELECTRIC IND CO LTD) 4 Septembre 1991,
- PATENT ABSTRACTS OF JAPAN vol. 14 no. 31 (P-993) ,22 Janvier 1990 & JP-A-01 269289 (KISHI INSATSU KOGYO KK) 26 Octobre 1989,
- DATABASE WPI Section Ch, Week 9403 Derwent Publications Ltd., London, GB; Class A89, AN 94-018809 & JP-A-05 325 259
- DATABASE WPI Section Ch, Week 9336 Derwent Publications Ltd., London, GB; Class A89, AN 93-283303 & JP-A-05 198 015
- PATENT ABSTRACTS OF JAPAN vol. 15 no. 347 (P-1246) ,3 Septembre 1991 & JP-A-03 130981
- PATENT ABSTRACTS OF JAPAN vol. 14 no. 258 (P-1055) ,4 Juin 1990 & JP-A-02 068788
- PATENT ABSTRACTS OF JAPAN vol. 9 no. 257 (P-396) ,15 Octobre 1985 & JP-A-60 106040
- PATENT ABSTRACTS OF JAPAN vol. 10 no. 210 (P-479) [2266] ,23 Juillet 1986 & JP-A-61 048144
- PATENT ABSTRACTS OF JAPAN vol. 15 no. 471 (P-1282) ,28 Novembre 1991 & JP-A-03 203048
- PATENT ABSTRACTS OF JAPAN vol. 14 no. 31 (P-993) ,22 Janvier 1990 & JP-A-01 269289

## Description

La présente invention a pour objet un procédé d'impression de disques compact et un dispositif pour la mise en oeuvre de ce procédé.

L'invention concerne les disques compact; on appelle couramment disques compact ou disques laser ou encore CD-ROM des supports de données à lecture optique, utilisés notamment pour l'enregistrement de pièces musicales, de films ou d'informations diverses. On entend par disque compact tout type de support de données de ce genre.

Ces disques présentent une face de lecture optique, susceptible d'être lue par des moyens de lecture optique. Sur l'autre face du disque, sont portées des informations relatives aux données enregistrées sur le disque, et par exemple le titre du programme musical, l'éditeur, etc. Cette face est désignée par le terme face d'étiquetage. On appelle impression de disques compact, l'opération ou la séquence permettant de reproduire des informations sur la face d'étiquetage d'un disque compact.

Il est connu, pour l'impression des disques compact, d'utiliser les techniques d'impression par sérigraphie, par offset, ou par transfert.

Ces techniques connues présentent des inconvénients.

Dans le cas de la sérigraphie, une encre est déposée sur la surface du disque compact à travers un écran de soie, puis ensuite séchée par ultraviolet. Ce mode d'impression ne permet que des impressions simples, en trait ou avec une trame faible. La cadence d'impression par sérigraphie est aussi limitée à quelques 3 000 disques compact par heure. Enfin, une impression par sérigraphie ne permet de déposer sur la face d'étiquetage du disque compact qu'une seule couleur. Il est donc nécessaire de réaliser autant de passages dans la machine de sérigraphie qu'il y a de couleurs à imprimer, ou de disposer d'une machine multiposte.

L'impression de disques compact par les techniques offset présente aussi des inconvénients. Tout d'abord, se pose le problème général du calage du support d'impression par rapport à la machine offset. Le calage est particulièrement délicat à réaliser lorsque l'on imprime en couleur, en déposant successivement des encres des quatre couleurs fondamentales (cyan, magenta, jaune et noir). L'impression offset nécessite des machines complexes et du personnel qualifié. La cadence des machines offset est limitée pour l'impression de disques compact à environ 3 000 exemplaires par heure. Enfin, les impressions obtenues présentent un aspect mat et terne, et sont susceptibles d'être grattées ou rayées.

Il a aussi été proposé de déposer par sérigraphie une sous-couche sur l'ensemble de la surface d'étiquetage, et d'imprimer par offset sur cette sous-couche. On arrive ainsi à obtenir une impression offset de bonne qualité. Toutefois, ce procédé cumule les inconvénients de la sérigraphie et de l'offset.

Dans un document FR-A-2 660 474, il a été proposé d'imprimer des disques compacts par transfert de colorants sublimés. Pour cela, on dépose sur un film transfert des colorants sublimés. Le support est ensuite pressé sur la surface du disque et chauufé de façon à transférer les colorants. Ce procédé implique de préparer un film transfert à l'aide de colorants sublimés. De plus il est nécessaire de presser et chauffer le disque au cours du transfert. Cette technique est limitée dans son rendement par le temps de chauffage, qui est d'au moins trois secondes. On ne peut donc imprimer plus de 1200 disques à l'heure avec une machine monoposte.

JP-A-05 325 259 décrit un disque optique, avec une couche d'enregistrement à pigment présentant une fiabilité accrue. Dans ce document, il est suggéré d'appliquer successivement sur un support une couche d'enregistrement contenant un pigment, une couche de réflection, une couche inférieure de protection, et une couche supérieure de protection. Il est possible de prévoir une couche imprimée entre les couches inférieures et supérieures de protection. Les couches de protection ont une épaisseur totale inférieure à 18 microns.

FR-A-2 613 523 décrit un disque d'enregistrement optique, présentant une face de non-reproduction qui comporte une zone d'écriture disponible pour l'adjonction par un utilisateur d'un message ou d'une illustration, de sorte à permettre de personnaliser le disque pour un cadeau.

Tous ces procédés sont difficiles à mettre en oeuvre sur de petites séries, et ne permettent pas une modification rapide de l'impression ou la réalisation d'impressions personnalisées.

La présente invention propose un procédé d'impression de disques compact et un dispositif pour la mise en oeuvre de ce procédé qui permettent de pallier ces inconvénients. Le procédé selon l'invention permet d'obtenir une impression avec une cadence plus élevée que les systèmes connus. Il a un coût unitaire faible et sa mise en oeuvre ne nécessite pas un personnel très qualifié.

Il permet une impression par petites séries, ou une impression personnalisée des disques compact.

L'impression obtenue par le procédé présente un aspect brillant et inaltérable.

L'invention a pour objet un procédé d'impression de disque compact, comprenant les étapes consistant à:
- déposer une colle sur la surface du disque compact, de préférence par pulvérisation ou injection en points;
- déposer sur cette colle une étiquette en papier préalablement imprimé;
- déposer une résine sur ladite étiquette.

L'invention permet d'éviter les problèmes liés aux techniques de sérigraphie ou d'offset. Elle permet une cadence d'impression plus rapide.

Avantageusement, l'étiquette est une étiquette en papier amorphe préalablement imprimée.

Ceci évite toute altération du disque compact, et permet une impression souple.

On peut aussi simplement maintenir l'étiquette sur le disque par aspiration ou par électricité statique, après l'étape consistant à déposer une étiquette sur le disque compact et avant l'étape consistant à déposer une résine sur ladite étiquette.

L'étape consistant à déposer une résine sur ladite étiquette peut s'effectuer par pulvérisation d'une résine.

Cette étape peut aussi s'effectuer par dépôt sérigraphique.

On peut faire suivre l'étape consistant à déposer une résine sur ladite étiquette d'une étape de séchage par rayons ultraviolets.

Ceci réduit le temps d'impression et limite le dépôt de poussières.

De préférence, pendant au moins l'étape consistant à déposer une résine sur ladite étiquette, le disque compact est maintenu à plat.

On évite ainsi toute déformation du disque.

On peut aussi prévoir selon l'invention une étape de désaération de la résine, préalable à l'étape consistant à déposer une résine sur ladite étiquette.

L'invention a aussi pour objet un dispositif pour la mise en oeuvre du procédé, comprenant:
- des moyens de transport de disques compact;
- un dépileur pour déposer des disques compact sur lesdits moyens de transport;
- un dispositif d'encollage pour déposer une colle sur la surface des disques compact déposés sur lesdits moyens de transport, de préférence par pulvérisation ou injection en points;
- un distributeur d'étiquettes pour déposer une étiquette sur la colle pulvérisée ou déposée en points sur la surface des disques compact;
- un poste de dépôt de résine sur ladite étiquette;
- un poste de séchage de ladite résine, et
- des moyens de maintien à plat des disques compact présents sur ladite bande de transport.

D'autres avantages et caractéristiques de l'invention apparaîtront à la lecture de la description qui suit, donnée à titre d'exemple, et en référence aux figures annexées, qui montrent:
- figure 1 un schéma de principe d'un dispositif pour la mise en oeuvre du procédé selon l'invention;
- figure 2 une vue schématique en coupe d'un disque compact imprimé selon l'invention.

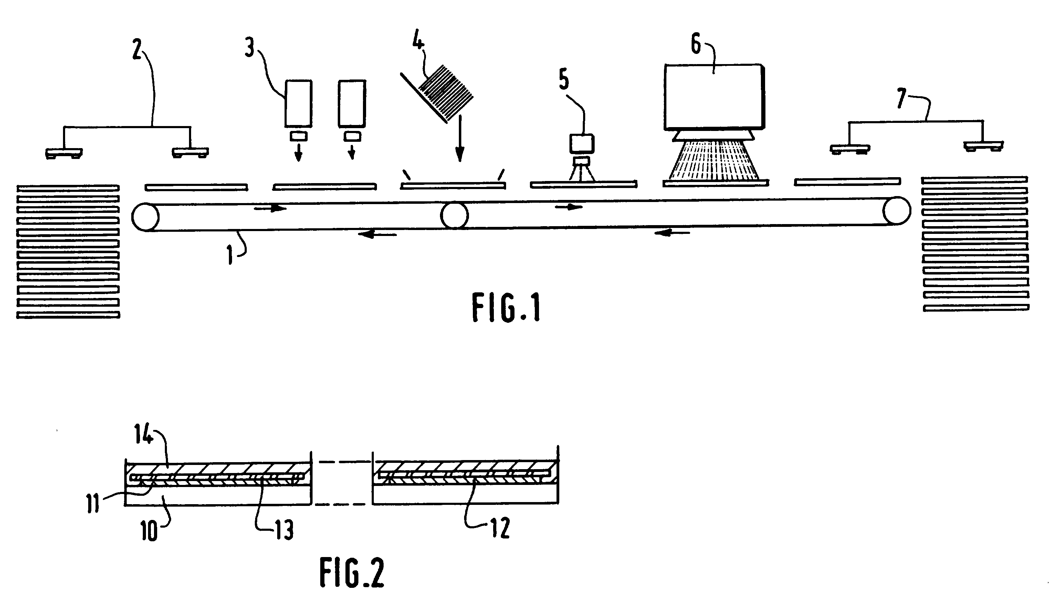

La figure 1 montre un schéma de principe d'un dispositif pour la mise en oeuvre du procédé selon l'invention. Le dispositif de la figure 1 comprend une bande de transport 1, le long de laquelle sont disposés différents postes de travail. Le premier poste de travail est un dispositif d'alimentation constitué par un dépileur 2; le dépileur 2 dépose les disques compact sur la bande de transport, à intervalle régulier. Les disques sont maintenus sur la bande par aspiration.

Le poste de travail suivant est constitué d'un dispositif d'encollage 3, qui dépose de la colle sur la surface du disque. La colle est de préférence déposée par pulvérisation ou injection en points; elle est déposée en plusieurs points, et par exemple en 4 points répartis sur la surface du disque compact. La colle utilisée est une colle qui n'altère par le vernis protecteur habituellement présent sur la surface d'impression du disque compact.

Après dépose de la colle sur la surface du disque, une étiquette est disposée sur la colle dans le poste de travail suivant: un distributeur d'étiquette 4, comprenant un mécanisme de centrage de l'étiquette par rapport au disque compact assure que l'étiquette est déposée centrée par rapport au disque.

On utilise des étiquettes de toute forme et de tout type. Ainsi, l'étiquette peut recouvrir toute la surface du disque compact, ou encore seulement une partie de celle-ci. On peut utiliser une étiquette en papier amorphe, de façon à éviter toute altération du vernis de protection. Avantageusement, on utilise un papier d'un grammage de 110 g/m².

Selon l'invention, il est possible de faire varier l'étiquette pour chaque disque: ainsi, l'étiquette qui est imprimée selon des procédés classiques peut être numérotée, présenter une signature ou tout autre personnalisation. Comme il n'est pas nécessaire de modifier le dispositif d'impression de disques compact lorsque l'étiquette varie, il est possible selon l'invention de réaliser des petites séries. L'invention assure ainsi une grande souplesse dans l'impression des disques compact.

Dans une variante de réalisation, l'étape consistant à coller l'étiquette sur le disque compact s'effectue par pulvérisation de colle sur l'étiquette et dépose de l'étiquette pré-encollée sur le disque. On peut aussi prévoir d'autres modes de collage de l'étiquette.

Dans un autre mode de réalisation de l'invention, l'étiquette n'est pas collée sur le disque, mais simplement déposée. Pour éviter des déplacements, on peut dans ce cas prévoir des moyens de maintien de l'étiquette sur le disque, par exemple par aspiration, par énergie électrostatique, ou tout autre moyen. Une fois l'étiquette déposée ou collée sur la surface du disque compact, on dispose sur l'étiquette une résine. Dans le dispositif de la figure 1, cette opération est réalisée dans un poste 5. On peut déposer la résine par pulvérisation, ou encore par sérigraphie.

La résine employée présente un aspect uniforme et brillant. Le disque compact imprimé selon l'invention présente ainsi, contrairement aux disques de l'art antérieur, une surface brillante, qui empêche toute altération de l'impression. Avantageusement, on utilise une résine autocicatrisable et non cassante, qui ne jaunit pas dans le temps à la lumière du jour.

De préférence, la résine employée est imperméable à l'air de façon à éviter tout échange entre l'étiquette et l'extérieur. Ceci évite une altération de l'étiquette.

On peut par exemple employer une résine époxy, telle que celle commercialisée par la société GRACE EMERSON sous le nom ECCOCOAT POLYMERS.

Pour éviter la formation de microbulles à la surface de la résine, ce qui fragilise l'impression et peut conduire à des altérations dans le temps, il est possible de procéder avant la dépose de la résine à une désaération sous vide de la résine.

La résine est ensuite séchée. Le séchage peut être un séchage à l'air libre, ou encore un séchage par ultraviolets ou par toute autre technique. Le dispositif de la figure 1 comprend un poste de séchage 6 par ultraviolets, qui permet d'assurer un séchage rapide, et évite le dépôt de poussières ou de corps étrangers sur le disque.

Lors du séchage se pose le problème de la déformation du disque. En effet, la résine peut se rétracter en séchant, ce qui conduit à une incurvation du disque compact vers le haut. Pour éviter ceci, il est proposé dans le dispositif de la figure 1 de maintenir le disque à plat par aspiration. A cet effet, la bande transporteuse 1 comprend des moyens d'aspiration non représentés. Ces moyens permettent de maintenir le disque à plat au cours de la dépose de la résine et du séchage.

Enfin, le dispositif de la figure 1 comprend un poste d'empilage 7 permettant de déposer sur une pile le disque compact imprimé selon l'invention, à sa sortie de la bande transporteuse 1.

La figure 2 montre une vue schématique en coupe d'un disque compact imprimé selon l'invention. On voit sur la figure 2 le disque compact 10, et sa surface d'étiquetage 11, la colle 12, l'étiquette 13 ainsi que la couche de résine 14.

Comme on le voit sur la figure 2, et conformément aux normes de fabrication des disques compact, l'impression ne déborde pas du disque compact et ne recouvre par le trou central. L'épaisseur de l'impression selon l'invention est inférieure à 0.3 mm, ce qui satisfait aux normes sur les disques compact.

De la sorte, l'impression selon l'invention permet de respecter la norme d'épaisseur des disques compact, en partant de disques compact classiques.

L'invention permet l'impression de disques compact à des cadances de l'ordre de 5000 disques par heure. Elle est simple à mettre en oeuvre à partir de matériels standard, et assure une impression de grande qualité à un prix de revient faible.

Bien entendu, la présente invention est susceptibles d'autres modes de réalisation. On pourrait ainsi séparer ou regrouper les différentes postes de travail du dispositif décrit en référence à la figure 1, prévoir l'impression simultanée de plusieurs disques, etc.

## Revendications

1. Procédé d'impression de disque compact, comprenant les étapes consistant à:
- déposer une colle sur la surface du disque compact, de préférence par pulvérisation ou injection en points;
- déposer sur cette colle une étiquette en papier préalablement imprimé;
- déposer une résine sur ladite étiquette.

2. Procédé d'impression de disque compact selon la revendication 1, caractérisé en ce que ladite étiquette est une étiquette en papier amorphe.

3. Procédé d'impression de disque compact selon la revendication 1 ou 2, caractérisé en ce que l'étiquette est maintenue sur le disque par aspiration ou par électricité statique après l'étape consistant à déposer une étiquette sur le disque compact et avant l'étape consistant à déposer une résine sur ladite étiquette.

4. Procédé d'impression de disque compact selon l'une des revendications 1 à 3, caractérisé en ce que ladite étape consistant à déposer une résine sur ladite étiquette s'effectue par pulvérisation d'une résine.

5. Procédé d'impression de disque compact selon l'une des revendications 1 à 3, caractérisé en ce que ladite étape consistant à déposer une résine sur ladite étiquette s'effectue par dépôt sérigraphique.

6. Procédé d'impression de disque compact selon l'une des revendications 1 à 5, caractérisé en ce que ladite étape consistant à déposer une résine sur ladite étiquette est suivie d'une étape de séchage par rayons ultraviolets.

7. Procédé d'impression de disque compact selon l'une des revendications 1 à 7, caractérisé en ce que, pendant au moins ladite étape consistant à déposer une résine sur ladite étiquette, le disque compact est maintenu à plat.

8. Procédé d'impression de disque compact selon la revendication 7, caractérisé en ce que, pendant ladite étape de séchage, le disque compact est maintenu à plat.

9. Procédé d'impression de disque compact selon l'une des revendications 1 à 8, caractérisé en ce qu'il comprend une étape de désaération de la résine, préalablement à ladite étape consistant à déposer une résine sur ladite étiquette.

10. Dispositif pour la mise en oeuvre du procédé selon l'une quelconque des revendications 1 à 9, comprenant:
- des moyens de transport (1) de disques compact;
- un dépileur (2) pour déposer des disques compact sur lesdits moyens de transport;
- un dispositif d'encollage (3) pour déposer une colle sur la surface des disques compact déposés sur lesdits moyens de transport, de préférence par pulvérisation ou injection en points;
- un distributeur d'étiquettes (4) pour déposer une étiquette sur la colle pulvérisée ou déposée en points sur la surface des disques compact;
- un poste (5) de dépôt de résine sur ladite étiquette;
- un poste de séchage (6) de ladite résine, et
- des moyens de maintien à plat des disques compact présents sur ladite bande de transport (1).

## Patentansprüche

1. Verfahren zum Bedrucken von CD's, umfassend die Schritte:
- Anordnen eines Klebstoffes an der Fläche der CD, bevorzugt mittels Pulverisierung oder punktweiser Injektion;
- Anordnen eines vorangehend bedruckten Papieretikettes an dem Klebstoff;
- Anordnen eines Harzes an dem Etikett.

2. Verfahren zum Bedrucken von CD's nach Anspruch 1, dadurch gekennzeichnet, daß das Etikett ein Etikett aus amorphem Papier ist.

3. Verfahren zum Bedrucken von CD's nach Anspruch 1 oder 2, dadurch gekennzeichnet, daß das Etikett an der Scheibe durch Ansaugung oder Elektrostatik gehalten wird nach dem Schritt des Anordnens eines Etiketts an der CD und vor dem Schritt des Anordnens eines Harzes an dem Etikett.

4. Verfahren zum Bedrucken von CD's nach einem der Ansprüche 1 bis 3, dadurch gekennzeichnet, daß der Schritt des Anordnens eines Harzes an des Etiketts durch Pulverisation eines Harzes erfolgt.

5. Verfahren zum Bedrucken von CD's nach einem der Ansprüche 1 bis 3, dadurch gekennzeichnet, daß der Schritt des Anordnens eines Harzes an des Etiketts mittels Siebdruckablagerung erfolgt.

6. Verfahren zum Bedrucken von CD's nach einem der Ansprüche 1 bis 5, dadurch gekennzeichnet, daß der Schritt des Anordnens eines Harzes an dem Etikett gefolgt wird von einem Schritt des Trocknens durch Ultraviolettstrahlen.

7. Verfahren zum Bedrucken von CD's nach einem der Ansprüche 1 bis 7, dadurch gekennzeichnet, daß zumindest während dem Schritt des Anordnens eines Harzes an dem Etikett die CD eben gehalten wird.

8. Verfahren zum Bedrucken von CD's nach Anspruch 7, dadurch gekennzeichnet, daß während dem Trocknungsschritt die CD eben gehalten wird.

9. Verfahren zum Bedrucken von CD's nach einem der Ansprüche 1 bis 8, dadurch gekennzeichnet, daß es einen Schritt des Entlüftens des Harzes umfaßt, und zwar vorangehend dem Schritt des Anordnens eines Harzes an dem Etikett.

10. Vorrichtung zum Durchführen des Verfahrens nach einem der Ansprüche 1 bis 9, umfassend:
- eine CD-Transporteinrichtung (1);
- eine Entstapeleinrichtung (2) zum Anordnen der CD's an der Transporteinrichtung ;
- eine Klebeeinrichtung (3) zum Anordnen eines Klebstoffes an der Fläche der CD's, welche an der Transporteinrichtung angeordnet sind, bevorzugt durch Pulverisation oder punktweise Injektion;
- eine Etikettenverteilereinrichtung (4) zum Anordnen eines Etiketts an dem auf der Fläche der CD's pulverisierten oder punktweise angeordneten Klebstoff;
- eine Stelle (5) zum Anordnen des Harzes an dem Etikett;
- eine Trocknungsstelle (6) des Harzes, und
- eine Einrichtung zum Ebenhalten der CD's, welche an dem Transportband (1) vorhanden sind.

## Claims

1. A method for printing an optical disc comprising the steps of:
- depositing an adhesive onto the surface of said optical disc prefeably by spraying or dropwise injection;
- depositing a previously printed label onto said adhesive;
- and then depositing a resin over said label.

2. The method for printing an optical disc according to claim 1, characterized in that said label is a label of amorphous paper.

3. The method for printing an optical disc according to claim 1 or 2, characterized in that said label is maintained by suction or by static electricity on said disc after the step of depositing a label thereon and prior to the step of depositing a resin over said label.

4. The method for printing an optical disc according to one of claims 1 to 3, characterized in that said step of depositing a resin over said label is carried out by spraying a resin.

5. The method for printing an optical disc according to one of claims 1 to 3, characterized in that the step of depositing a resin on said label is carried out by silk screening.

6. The method for printing an optical disc according to one of claims 1 to 5, characterized in that said step of depositing a resin over said label is followed by a drying step, using ultraviolet radiation.

7. The method for printing an optical disc according to one of claims 1 to 6, characterized in that, during at least said step of depositing a resin over said label, said disc is kept flat.

8. The method for printing an optical disc according to claim 7, characterized in that, during at least said drying step, said disc is kept flat.

9. The method for printing an optical disc according to one of claims 1 to 8, characterized in that it includes a step of outgassing said resin prior to depositing said resin over said label.

10. A device for carrying out the method according to one of claims 1 to 9 comprising:
- optical disc conveying means (1) ;
- a destacker (2) for depositing optical discs on said conveying means;
- an adhesive application device (3) for depositing an adhesive onto the surface of said optical discs carried on said conveying means, preferably by spraying or injection by drops;
- a label dispenser (4) for placing a label onto the adhesive sprayed or deposited in drops onto the surface of said compact discs;
- a station (5) for depositing resin over said label;
- a station (6) for drying said resin, and
- means for keeping the discs present on said conveying means (1) in a flat position.
